# EUROPÄISCHE PATENTSCHRIFT

(11) **EP 1 412 232 B1**
(45) Veröffentlichungstag und Bekanntmachung des Hinweises auf die Patenterteilung: **07.09.2005**
(21) Anmeldenummer: 02794495.8
(22) Anmeldetag: 01.06.2002
(51) Int. Cl.: B60R 21/20

(54) **INSASSENRÜCKHALTESYSTEM IM FONDBEREICH EINES KRAFTFAHRZEUGS**
OCCUPANT RESTRAINT SYSTEM LOCATED IN THE REAR PASSENGER COMPARTMENT OF A MOTOR VEHICLE
SYSTEME DE RETENUE DES PASSAGERS DANS LA ZONE DES SIEGES ARRIERE D'UN VEHICULE AUTOMOBILE

(30) Priorität: 02.08.2001 DE 10137824
(43) Veröffentlichungstag der Anmeldung: 28.04.2004
(60) Teilanmeldung: 04029538.8
(73) Patentinhaber: DaimlerChrysler AG, 70567 Stuttgart (DE)
(72) Erfinder: BOSSENMAIER, Alban, 71126 Gäufelden-Nebringen (DE); BRUHNKE, Ulrich, D-71139 Ehningen (DE); FRENZEL, Klaus, 71364 Winnenden (DE); GÜNAK, Murat, 71139 Ehningen (DE); HENSEL, Jörg, 71069 Sindelfingen (DE); MALY, Peter, 72184 Eutingen im Gäu (DE)
(86) Internationale Anmeldenummer: PCT/EP2002/006025
(87) Internationale Veröffentlichungsnummer: WO 2003/013914

(56) Entgegenhaltungen:
- EP-A- 0 590 845
- EP-A- 0 940 299
- EP-A- 0 940 302
- WO-A-97/04995
- WO-A-99/39941
- DE-A- 10 023 779
- US-A- 553 887
- US-A- 5 072 966

## Beschreibung

Die vorliegende Erfindung betrifft ein Insassenrückhaltesystem im Fondbereich eines Kraftfahrzeugs mit den Merkmalen des Oberbegriffs des Anspruchs 1.

Waren vor einiger Zeit Airbags noch besondere Ausstattungsmerkmale von Kraftfahrzeugen, insbesondere der gehobenen Fahrzeugklasse, so ist es heute üblich, daß auch bei kleineren Fahrzeugen mindestens ein Airbag, nämlich ein Frontairbag im Lenkradbereich und gegebenenfalls ein Beifahrer-Frontairbag zur Serienausstattung gehört.

In zunehmendem Maße trifft dies auch für Seitenairbags zu, bei denen es sich ebenfalls um einem jeweiligen Fahrzeugsitz zugeordnete passive Rückhaltekomponenten handelt, wobei der Airbag auf ein Auslösesignal hin schlagartig mit Gas gefüllt wird, sich zwischen Insassen und seitlicher Fahrzeugkarosserie entfaltet, um so die auf dem jeweiligen Fahrzeugsitz sitzende Person im Falle eines Aufpralls oder sonstigen Unfalls im Fahrzeug zu schützen.

In der Praxis ist es allgemein üblich, einen Fahrzeugsitz dergestalt bereitzustellen, daß eine Sitzlehne wenigstens in Fahrtrichtung gesehen ein vor einer Sitzstruktur angeordnetes Polster, beispielsweise aus Schaumstoff, aufweist, welches von einem Bezug umschrankt ist. Der Bezug läuft dabei um die in der Sitzlehne angeordnete Sitzstruktur. Die Sitzstruktur dient zur Stabilisierung der Sitzlehne und besteht üblicherweise aus einem profilierten Blech.

Ein Seitenairbagmodul umfaßt in der Regel einen Gasgenerator sowie einen Gassack. Wird das Modul ausgelöst, so produziert der sensorgesteuerte Gasgenerator ein Gas, mit welchem der Gassack kurzzeitig befüllt wird, so daß zum Schutz des Insassen ein ballonartiges Schutzkissen gebildet wird, das sodann erschlafft, um zu vermeiden, daß der auf das Kissen aufprallende Insasse vehement zurückgeworfen wird. Der mit dem Seitenairbagmodul verbundene Sensor kann sowohl aufprallgesteuert sein als auch auf einer Precrashsensorik beruhen.

Aus der EP 0 919 365 A1 ist ein Insassenrückhaltesystem im Fondbereich eines Kraftfahrzeugs in Form eines Seitenairbagmoduls bekannt, welches in einem Fahrzeugsitz angeordnet ist. Das Airbagmodul ist dabei an der Sitzstruktur befestigt und mit einem Polster und einem Bezug überzogen. Wenn sich der Airbag auf ein Auslösesignal hin entfaltet, um die auf dem jeweiligen Fahrzeugsitz sitzende Person im Falle eines Aufpralls oder sonstigen Unfalls im Fahrzeug zu schützen, muß er durch Polster und Bezug hindurchtreten. Dazu müssen Polster und Bezug so ausgelegt sein, daß ein Durchtritt vorhanden ist bzw. sich beim Entfalten des Airbags bildet, der im normalen Betrieb des Fahrzeugs geschlossen ist und durch die Kraft des sich entfaltenden Airbags zuverlässig öffnen läßt. Im Stand der Technik sind dazu aufwendige Konstruktionen in der Sitzstruktur zum Aufreißen des Kissens vorgesehen. Entsprechende Vorrichtungen sind auch aus der gattungsbildenden EP 0 940 299 A1 sowie der ebenfalls gattungsbildenden WO 99/39941 A bekannt.

Das Auslegen eines solchen Durchtritts ist sehr schwierig und sehr aufwendig. In geschlossenem Zustand darf er aus optischen Gründen nicht sichtbar sein. Er muß sich aber im Falle des Auslösens des Airbags zuverlässig öffnen lassen und den Airbag freigeben. Bei dem Auslegen des Durchtritts kommt erschwerend hinzu, daß die Stelle im Rücksitz, an dem der Durchtritt angeordnet ist, stark beansprucht wird, so daß der Verschleiß der Rücksitzlehne mit berücksichtigt werden muß. Der Airbag muß bei einer wenig verschlissenen Rücksitzlehne genauso zuverlässig austreten können, wie bei einer stark verschlissenen Rücksitzlehne. Andererseits darf der Durchtritt auch bei einer stark verschlissenen Rücksitzlehne nicht sichtbar werden oder sogar sich öffnen, ohne daß der Airbag auslöst. Ein weiterer Nachteil der bekannten Lösung besteht darin, daß der dem Airbag entgegengebrachte Öffnungswiderstand, insbesondere dann, wenn ein Insasse auf dem Fahrzeugsitz sitzt, sehr groß ist. Es ist also viel Kraft notwendig, damit der Airbag überhaupt austreten kann. Hinzu kommt noch, daß der Bauraum in einem Sitz sehr beschränkt ist, so daß das Anordnen des Airbags in dem Sitz ohne Komfortverlußt für einen Fahrzeuginsassen sehr aufwendig ist.

Aus all diesen Gründen bietet es sich an, ein Seitenairbagmodul neben einem Rücksitz eines Kraftfahrzeugs anzuordnen. Ein Insassenrückhaltesystem für den Rücksitz eines Fahrzeugs, bei dem das Airbagmodul neben dem Sitz angeordnet ist, ist aus der DE 195 28 627 C1 bekannt. Das bekannte Airbagmodul wird von einer Klappe verdeckt. Der in Fahrtrichtung nach vorne weisende Abschnitt der Klappe liegt mit seinem freien Ende unter Bildung eines Spaltes an einem seitlichen Karosserie- oder Verkleidungsteil an. Der Airbag und der Gasgenerator sind so in dem von der Klappe umschlossenen Raum angeordnet, daß der Airbag durch den Spalt ausbringbar ist. Beim Ausbringen des Airbags wird die Klappe in Richtung Fahrzeuginsasse weggedrückt.

Die Klappe ist als separates Bauteil ausgeführt und neben dem Rücksitz angeordnet. Sie muß separat hergestellt und im Fahrzeug montiert werden. Für diese separate Klappe ist somit ein erhöhter Fertigungs- und auch ein erhöhter Montageaufwand notwendig, was sich negativ auf die Herstellungskosten der Kraftfahrzeuge auswirkt. Hinzu kommt, daß die Klappe zumindest in ihrem Kern aus festem, nur bedingt nachgiebigem Material - nämlich einem Federkern - besteht. Dieser Kern bringt die Gefahr von Verletzungen mit sich. Wenn die Klappe beim Entfalten des Airbags von der seitlichen Karosserie oder Verkleidung weg in Richtung des auf dem Sitz befindlichen Insassen schwenkt und der Insasse sich aufgrund eines Aufpralls oder eines sonstigen Unfalls in Richtung seitliche Karosserie bzw. Verkleidung bewegt, befindet sich die Klappe genau zwischen Insassen und Airbag. Je nachdem, welche Position die Klappe in dieser Situation einnimmt, besteht die Gefahr von Beeinträchtigungen des Fahrzeuginsassen.

Vor diesem Hintergrund liegt der Erfindung die Aufgabe zugrunde, ein Insassenrückhaltesystem im Fondbereich eines Kraftfahrzeugs zu schaffen, welches die Sicherheit von Fahrzeuginsassen weiter erhöht und gleichzeitig einfach und damit kostengünstig herzustellen ist.

Diese Aufgabe wird durch ein Insassenrückhaltesystem im Fondbereich eines Kraftfahrzeugs mit den Merkmalen des Anspruchs 1.

Demnach zeichnet sich das erfindungsgemäße Insassenrückhaltesystem im Fondbereich eines Kraftfahrzeugs dadurch aus, daß es ein einen Gassack und einen Gasgenerator umfassendes Seitenairbagmodul aufweist, das neben der der seitlichen Karosserie zugewandten Seite eines Rücksitzes angeordnet ist, wobei in Fahrtrichtung vor dem Seitenairbagmodul eine Abdeckung vorgesehen ist, die aus elastisch deformierbarem Material besteht und ein integraler Bestandteil einer Seitenwange des Rücksitzes ist. Das Seitenairbagmodul ist an einer hinter dem Rücksitz angeordneten Schottwand befestigt und stützt sich an dieser beim Entfalten ab. Die Verwendung der Schottwand als Befestigungspunkt ist deshalb vorteilhaft, weil sie schon vorhanden ist und keine zusätzlichen, ausreichend stabilen Befestigungsvorrichtungen montiert werden müssen.

Durch die Ausbildung der Abdeckung des Seitenairbagmoduls aus elastisch deformierbarem Material, bringt das erfindungsgemäße Insassenrückhaltesystem im Fondbereich eines Kraftfahrzeugs den Vorteil mit sich, daß ein Teil der beim Entfalten freiwerdenden Energie durch die Abdeckung abgefangen wird. Mit anderen Worten kann der Airbag sein Volumen zum Teil im deformierbaren Material der Abdeckung ablegen. Dadurch wird verhindert, daß der Insassen von dem sich entfaltenden Airbag beeinträchtigt wird.

Hinzu kommt, daß der Seitenairbag beim Entfalten zunächst gegen die Abdeckung drückt. Die Abdeckung wiederum drückt daraufhin gegen den sich eventuell in einem "out-of-position"-Zustand befindenden Insassen. Auf diese Weise wird der Insasse zunächst von der Abdeckung angeschoben und gibt dann den Austritt für den Airbag frei, so daß der Insasse auch dann durch den Airbag geschützt wird, wenn er einen "out-of-position"-Zustand einnimmt, was vor allem bei Kinder häufig vorkommt, die ja in der Regel auf den Rücksitzen eines Kraftfahrzeuges sitzen.

Die Ausführung der Airbag-Abdeckung als integraler Bestandteil von im Fahrzeug befindlichen Strukturen bringt zudem einen Vorteil in Bezug auf die Kosten bei der Montage und der Fertigung mit sich. Die Anformung der Abdeckung an eine Seitenwange eines Rücksitzes stellt in der Fertigung keinen erhöhten Aufwand dar. Soll die Abdeckung aus demselben Material bestehen, wie das Sitzpolster, muß lediglich eine andere Form für die Herstellung des Polsters verwendet werden. Diese Form muß einmal abgeändert werden, danach ist der Fertigungsaufwand derselbe. Bei der Montage wird im Vergleich zum Stand der Technik erheblich Zeit gespart, weil nur der Sitz mit seinen Seitenwangen in die Karosserie eingebracht werden muß. Weitere Schritte sind nicht notwendig. Im Gegensatz zum Stand der Technik erübrigt sich also die Montage einer separaten Klappe. Die Einsparung dieses Arbeitsschritts bringt insbesondere in der Serienfertigung erhebliche Zeit- und damit Kostenvorteile mit sich.

Die Anordnung des Airbags neben dem Sitz ist deshalb von Vorteil, weil dort erheblich viel mehr Platz zur Verfügung steht als in einem Fahrzeugrücksitz. Dadurch wird ein zuverlässiges Austreten des Airbags gewährleistet, weil der Öffnungswiderstand im Gegensatz zu einem Airbag, der im Sitz angeordnet ist, aufgrund des größeren zur Verfügung stehenden Bauraums, geringer ist.

Bevorzugt besteht die Abdeckung aus demselben Material wie die Polster von Sitz und ist auch mit demselben Bezug überzogen. Dadurch werden zum einen die schon erläuterten kostenreduzierenden Vorteile bei der Montage und zum anderen ein optisch ansprechender Innenraum erreicht, in dem die Anordnung von Seitenairbags nicht ins Auge fällt, weil der Bezug seiner Umgebung angepaßt ist. Es ist also kein aufwendiges Kaschieren einer Airbag-Abdeckung wie bei bekannten beispielsweise in ein Armaturenbrett integrierten Airbagdeckeln notwendig.

Es kann vorgesehen sein, daß die Abdeckung, die ein integraler Bestandteil einer Seitenwange ist, an der seitlichen Karosserie bzw. der seitlichen Verkleidung lösbar befestigt ist. Das hat den Vorteil, daß zwischen Sitz und Verkleidung kein Spalt vorgesehen ist, der den optischen Eindruck eines Fahrzeuginnenraums beeinträchtigen kann.

Unter der Airbag-Abdeckung kann zusätzlich ein Airbagdeckel vorgesehen sein. Dieser kann jedoch auch durch die erfindungsgemäße Abdeckung ersetzt werden.

Im folgenden wird die Erfindung anhand des in der Zeichnung dargestellten Ausführungsbeispiels des näheren erläutert.

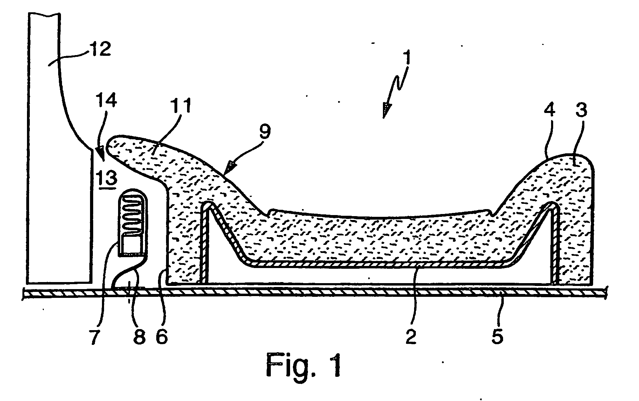

Figur 1 zeigt einen Schnitt durch einen Rücksitz und eine Seitenverkleidung eines Kraftfahrzeugs mit einem neben dem Sitz angeordneten erfindungsgemäßen Insassenrückhaltesystem, bei dem die Abdeckung ein integraler Bestandteil einer Seitenwange des Rücksitzes ist.

In Fig. 1 ist ein Rücksitz 1 eines Kraftfahrzeugs dargestellt. Der Rücksitz besteht aus einer Sitzstruktur 2, einem Sitzpolster 3 und einem das Sitzpolster 3 umgebenden Bezug 4. Die Sitzstruktur 2, die vor einer Schottwand 5 angeordnet ist, dient dazu, die Struktur des Sitzes 1 zu stabilisieren. Polster 3 und Bezug 4 dienen Komfortzwecken sowie der Optimierung des optischen Eindrucks des Rücksitzes 1.

Neben der der seitlichen Karosserie des Kraftfahrzeugs zugewandten Seite 6 des Rücksitzes 1 ist ein Seitenairbagmodul 7, das einen Gassack und einen Gasgenerator umfaßt, angeordnet. Das Modul 7 kann entweder über eine Haltevorrichtung 8 oder bevorzugt direkt an der Schottwand 5 befestigt sein. An dieser Schottwand 5 stützt es sich beim Entfalten des Gassacks ab.

Der Rücksitz 1 weist an seiner der seitlichen Karosserie zugeordneten Seitenwange 9 eine angeformte Verlängerung 11 auf. Diese Verlängerung 11 erstreckt sich von der Seitenwange 9 des Sitzes 1 in Richtung der seitlichen Karosserie und bildet mit der Seitenwange 9, der Schottwand 5 und der an der seitlichen Karosserie angebrachten Verkleidung 12 einen Hohlraum 13. In diesem Hohlraum 13 ist das Seitenairbagmodul 7 angeordnet. Die Verlängerung 11 bildet eine Abdeckung 11 des Seitenairbagmoduls 7 in Richtung des Fahrzeuginnenraums. Das Seitenairbagmodul 7 ist so ausgerichtet, daß sich der Airbag in Fahrtrichtung schauend nach vorne entlang der Seitenverkleidung bzw. der seitlichen Karosserie entfaltet.

Die Abdeckung 11 besteht aus dem selben Material, wie das Sitzpolster 3 und ist mit dem selben Bezug 4 überzogen wie der gesamte Rücksitz 1. Aufgrund dieser Tatsachen, sind der Fertigungs- und der Montageaufwand verglichen mit einfachen Rücksitzen ohne angeformte Abdeckung der selbe. Es muß lediglich die Form für das Sitzpolster 3 angepaßt und etwas mehr Bezug verwendet werden. Die Abdeckung 11 kann nur auf der Höhe des Airbags vorgesehen sein, wobei jedoch nichts dagegen spricht, den Fahrzeugsitz 1 auch so zu gestalten, daß sich die Abdeckung 11 über die gesamte Höhe des Fahrzeugsitzes 1 erstreckt.

In dem in Fig. 1 dargestellten Ausführungsbeispiel besteht zwischen Abdeckung 11 und Seitenverkleidung 12 ein Spalt 14. Es kann aber auch vorgesehen sein, daß die Abdeckung 11 lösbar mit der Seitenverkleidung 12 verbunden ist. Diese lösbare Verbindung muß so ausgelegte sein, daß sie durch den austretenden Airbag zuverlässig gelöst werden kann.

Wenn der signalgesteuerte Airbag aus dem Seitenairbagmodul 13 auslöst, stößt er gegen die Abdeckung 11. Da diese aus elastisch deformierbarem Material besteht, wird sie zunächst zusammen und dann auch auf die Seite in Richtung Fahrzeuginsassen gedrückt und gibt damit den Weg für den sich entfaltenden Airbag frei. Wenn die Abdeckung 11 lösbar mit der Seitenverkleidung 12 verbunden ist, muß diese durch den austretenden Airbag geöffnet werden. Dadurch, daß der Airbag zunächst gegen die Abdeckung 11 stößt, wird ein Teil der beim Entfalten freiwerdenden Energie abgefangen. Der Airbag kann also ein Teil seines Volumens zum Teil in dem elastisch deformierbaren Material der Abdeckung 11 ablegen. Dadurch wird verhindert, daß der Insasse von dem sich entfaltenden Airbag verletzt wird.

Hinzu kommt, daß der Airbag beim Entfalten zunächst gegen die Abdeckung 11 drückt. Die Abdeckung 11 wiederum drückt daraufhin gegen den sich eventuell in einem "out-of-position"-Zustand befindlichen Insassen. Auf diese Weise wird der Insasse zunächst von der Abdeckung 11 angeschoben und gibt dann den Austritt für den Airbag frei. So werden Beeinträchtigungen des Fahrzeuginsassen zumindest reduziert und der Insasse durch den Seitenairbag auch dann geschützt, wenn er sich in einem "out-of-position"-Zustand befindet.

## Patentansprüche

1. Insassenrückhaltesystem im Fondbereich eines Kraftfahrzeugs mit einem einen Gassack und einen Gasgenerator umfassenden Seitenairbagmodul, das neben der der seitlichen Karosserie zugewandten Seite eines Rücksitzes angeordnet ist, wobei in Fahrtrichtung vor dem Seitenairbagmodul eine Abdeckung vorgesehen ist, wobei die Abdeckung aus elastisch deformierbarem Material besteht und ein integraler Bestandteil einer Seitenwange des Rücksitzes ist,
**dadurch gekennzeichnet,**
**daß** das Seitenairbagmodul (7) an einer hinter dem Rücksitz (1) angeordneten Schottwand (5) befestigt ist und sich an dieser beim Entfalten abstützt.

2. Insassenrückhaltesystem nach Anspruch 1,
**dadurch gekennzeichnet,**
**daß** die Abdeckung (11) aus Schaumstoff besteht.

3. Insassenrückhaltesystem nach Anspruch 1 oder 2,
**dadurch gekennzeichnet,**
**daß** die Abdeckung (11) mit einem Bezug (4) überzogen ist.

4. Insassenrückhaltesystem nach einem der vorhergehenden Ansprüche,
**dadurch gekennzeichnet,**
**daß** die Abdeckung (11) an der seitlichen Karosserie bzw. der seitlichen Verkleidung (12) lösbar befestigt ist.

5. Insassenrückhaltesystem nach einem der vorhergehenden Ansprüche,
**dadurch gekennzeichnet,**
**daß** zwischen der Abdeckung (11) aus Schaumstoff und dem Seitenairbagmodul (7) ein Airbagdeckel vorgesehen ist.

6. Insassenrückhaltesystem nach einem der vorhergehenden Ansprüche,
**dadurch gekennzeichnet,**
**daß** die Abdeckung (11) den Airbagdeckel bildet.

7. Insassenrückhaltesystem nach einem der vorhergehenden Ansprüche,
**dadurch gekennzeichnet,**
**daß** das Seitenairbagmodul (7) so angeordnet ist, dass er sich in Fahrtrichtung schauend nach vorne entfaltet.

## Claims

1. Passenger restraining system in the rear region of a motor vehicle with a side air bag module comprising a gas bag and a gas generator, which is disposed adjacent to the side of a rear seat facing the side body work, a cover being provided in front of the side air bag module in the direction of travel, which cover is made from elastically deformable material and is an integral part of a side panel of the rear seat,
**characterised in that**
the side air bag module (7) is secured to a cross-wall (5) disposed behind the rear seat (1) and supported on it as it unfolds.

2. Passenger restraining system as claimed in claim 1,
**characterised in that**
the cover (11) is made from foam.

3. Passenger restraining system as claimed in claim 1 or 2,
**characterised in that**
the cover (11) is covered by means of a covering (4).

4. Passenger restraining system as claimed in one of the preceding claims,
**characterised in that**
the cover (11) is detachably secured to the side body work or the side trim (12).

5. Passenger restraining system as claimed in one of the preceding claims,
**characterised in that**
an air bag lid is provided between the cover (11) of foam and the side air bag module (7).

6. Passenger restraining system as claimed in one of the preceding claims,
**characterised in that**
the cover (11) forms the air bag lid.

7. Passenger restraining system as claimed in one of the preceding claims,
**characterised in that**
the side air bag module (7) is disposed so that it unfolds towards the front, looking in the direction of travel.

## Revendications

1. Système de retenue des passagers dans la zone des sièges arrière d'un véhicule automobile, comportant un module d'airbag latéral, qui est formé par un coussin gonflable et un générateur de gaz et qui est agencé près du côté d'un siège arrière, orienté vers la carrosserie latérale, un cache étant prévu, dans le sens de déplacement du véhicule, devant le module d'airbag latéral, le cache étant réalisé en matériau élastique déformable et formant une partie intégrale d'une joue latérale d'un siège arrière, **caractérisé en ce que** le module d'airbag latéral (7) est fixé contre une cloison étanche (5), disposée derrière le siège arrière (1), et il vient en appui contre celle-ci au moment du déploiement.

2. Système de retenue des passagers selon la revendication 1, **caractérisé en ce que** le cache (11) est réalisé en mousse synthétique.

3. Système de retenue des passagers selon la revendication 1 ou 2, **caractérisé en ce que** le cache (11) est revêtu d'un habillage (4).

4. Système de retenue des passagers selon l'une quelconque des revendications précédentes, **caractérisé en ce que** le cache (11) est fixé de manière amovible contre la carrosserie latérale ou le parement latéral (12).

5. Système de retenue des passagers selon l'une quelconque des revendications précédentes, **caractérisé en ce qu'**il est prévu un couvercle d'airbag entre le cache (11) en mousse synthétique et le module d'airbag latéral (7).

6. Système de retenue des passagers selon l'une quelconque des revendications précédentes, **caractérisé en ce que** le cache (11) forme le couvercle d'airbag.

7. Système de retenue des passagers selon l'une quelconque des revendications précédentes, **caractérisé en ce que** le module d'airbag latéral (7) est agencé de telle sorte qu'il se déploie vers l'avant, par référence au sens de déplacement du véhicule.
